# EUROPEAN PATENT SPECIFICATION

(11) **EP 4 053 530 B1**
(45) Date of publication and mention of the grant of the patent: **01.05.2024**
(21) Application number: 21160310.5
(22) Date of filing: 02.03.2021
(51) Int. Cl.: G01L 9/08, G01L 19/04, G01L 1/16

(54) **PIEZOELECTRIC BASED SENSORS**
PIEZOELEKTRIK BASIERENDE SENSOREN
CAPTEURS À BASE PIÉZOÉLECTRIQUE

(43) Date of publication of application: 07.09.2022
(73) Proprietor: Hidria d.o.o., 5281 Spodnja Idrija (SI)
(72) Inventor: ROVSCEK, Domen, 5216 MOST NA SOCI (SI); PODOBNIK, Aljaz, 5220 TOLMIN (SI); BERGINC, Bostjan, 5000 NOVA GORICA (SI); URSIC, Peter, 5222 KOBARID (SI)
(74) Representative: BARRE LAFORGUE

(56) References cited:
- GB-A- 1 108 846
- US-A- 5 777 239
- US-B2- 10 245 064

## Description

### [Technical Field]

The subject application relates to devices and manufacturing methods for force and/or pressure measurement based on piezoelectric effects.

Similar devices may be found in US 5 777 239 A, GB 1 108 846 A and US 10 245 064 B2. However, none of these patent documents is concerned with the compensation of temperature variations. Furthermore, none of them discloses or hints to the claimed electrode configuration, namely:
- the central pin supporting a positive electrode and a negative electrode such that the positive electrode is spaced apart from the negative electrode,
- the piezoelectric transducer assembly comprising at least two electrically conductive members,
- the piezoelectric sensitive element having opposed faces comprising at least one inner electrode (1311) and at least one outer electrode (1312) surrounding radially the inner electrode (1311), the inner electrode (1311) and the outer electrode (1312) being mutually separated, wherein,
- the outer electrode (1312) and the inner electrode (1311), on each opposed face of the piezoelectric sensitive element (131), are mutually polarized along opposite directions of the thickness of the piezoelectric sensitive element (131), and
- two electrically conductive members (132) sandwich said at least one piezoelectric sensitive element (131) such that each outer electrode (1312) and each inner electrode (1311) are connected with the positive electrode (110) and the negative electrode (120) and the piezoelectric transducer assembly (130) is so arranged that one of said two electrically conductive members (132) sandwiching said at least one piezoelectric sensitive element (131) is connected to the positive electrode (110), while the other one is connected to the negative electrode.

### [Background Art]

Injection molding is one of the most popular methods of mass production and is used extensively in the fabrication of automotive components, electronics, household items, optical lenses, sports goods, medical devices, and so on.

In injection molding, a high temperature melted resin is injected with high pressure into a mold. After the mold is filled with melted resin and cools down, the mold is open, and the product is taken out. But sometimes for some reason such as poor mold design, poor control of forming conditions or the property of material, defects of the production may occur.

Hence, for improvement of the productivity of the fabrication, injection molding process control is commonly used to get information from the inside of the mold cavity.

In the injection molding process control, the mold cavity pressure is considered to be highly related to the final quality of the product than pressures measured at other locations in the molding system (e.g., hydraulic actuator or injection nozzle).

Usually, pressure sensors based on piezoelectric effects are used to detect in-mold process parameters.

There are various known pressure sensors of the kind which can convert the pressure in a cavity to a measurable charge by means of the piezoelectric effect. In particular, such known pressure sensors are equipped with high-precision quartz crystals (SiOz or α-quartz) which release a charge under the influence of pressure or force. This charge, amplified by a charge amplifier, provides precise information about the pressure applied to the sensor and makes it possible to monitor the exact cavity pressure in the injection molding process.

However, such known pressure sensors are highly sensitive to environmental temperature changes. Indeed, during temperature changes, electrical charging can be generated on the surface of the piezoelectric body due to the pyroelectric effect, and such charges are also detected as an electric output. Because of these disturbances, such known pressure sensors can output incorrect measurements.

The foregoing has the effect that such known pressure sensors cannot distinguish environmental temperature changes from those which are desired to be measured from incoming applied stress.

Furthermore, such known pressure sensors are also usually complex to manufacture.

Therefore, it is an object of the present invention to provide a pressure sensor that is reliable by self-compensating for environmental temperature changes.

It is also an object of the present invention to provide a pressure sensor that is easy to manufacture and further designed to overcome drawbacks typically associated with pressure sensors.

### [Summary of Invention]

The subject application provides a sensor and a manufacturing method for force and/or pressure measurement based on piezoelectric effects. Particularly, the present invention relates to a sensor according to claim 1.

Dependent claims describe specific embodiments of the subject application.

These and other aspects of the subject application will be apparent from an elucidated based on the embodiments described hereinafter.

### [Brief Description of Drawings]

Further details, aspects and embodiments of the subject application will be described, by way of example only, with reference to the drawings. In the drawings, like reference numbers are used to identify like or functionally similar elements. Elements in the figures are illustrated for simplicity and clarity and have not necessarily been drawn to scale.
Figure 1 shows an exploded view of a sensor according to the subject application.
Figure 2 shows a perspective view of a sensor according to a first embodiment of the subject application.
Figure 3 shows a perspective view of a sensor according to a second embodiment of the subject application.
Figure 4 shows a perspective view of the piezoelectric transducer assembly according to said first embodiment.
Figure 5 shows a perspective view of the central pin.
Figure 6 shows perspective view of a piezoelectric sensitive element.
Figure 7 shows a face of a piezoelectric sensitive element.
Figure 8 shows a cross-sectional view taken along the line A-A in FIG. 7.
Figure 9 shows a perspective view of an electrically conductive member.
Figure 10 shows a perspective view of a sensor according to a third embodiment of the subject application.
Figure 11 shows a perspective view of a sensor according to a fourth embodiment of the subject application.
Figure 12 shows a schematic flow diagram according to the subject application.

### [Description of Embodiments]

Because the illustrated embodiments of the subject application may for the most part, be composed of components known to the skilled person, details will not be explained in any greater extent than that considered necessary for the understanding and appreciation of the underlying concepts of the subject application, in order not to obfuscate or distract from the teachings of the subject application.

The subject application relates to a sensor for force and/or pressure measurement.

In an embodiment, the sensor may be used for cavity pressure monitoring.

In an example, one may install the sensor in a mold cavity of a molding system, thereby directly exposing the sensor to a material under pressure flowing in the mold cavity in a respective area. In that case, if the sensor is directly exposed to pressure in a mold cavity for example, this pressure acts on the pressure pin 160 of the sensor and transfers a force to the transducer assembly 130. In this case the sensitivity of the sensor only depends on parts of the sensor. When pressure is applied, the sensor may deliver an electrical charge, which is then converted into a change of pressure through a predetermined sensor sensitivity.

In another example, one may install the sensor outside a mold cavity of a molding system, thereby indirectly exposing the sensor to a material under pressure flowing in the mold cavity. In that case, If the sensor is indirectly exposed to the pressure, a pressure may be exerted on an ejector pin of the mould and this ejector pin can transfer the force to the contact area 151 of the sensor. In this case the sensor does not have a pressure pin 160 and the sensitivity of the sensor directly correlates with the surface area of the ejector pin, the larger is the surface area of the ejector pin, the higher is the sensitivity. Therefore, the final sensitivity (in V/bar or pC/bar) is not defined just by the sensor characteristics, but needs to be calculated based on the tool, where the sensor is mounted (based on the surface area of said ejector pin for example).

The pressure may be transmitted to the sensor as a force exerted on a pressure pin directly exposed to the material flowing in the mold cavity or indirectly on the contact area 151. In response to this force, the sensor may emit an electrical charge, which is then converted into a change of force through a predetermined sensor sensitivity. This change of force combined with the contact area 161 of the direct sensor or with surface area of the ejector pin for the indirect sensor may be used to calculate the pressure change.

The output of the sensor can be charge (direct output from sensing unit) or voltage (integrated electronics converts charge from sensing unit to voltage output of the sensor). The ratio between output charge/voltage and applied pressure is the sensitivity of the sensor.

However, one may use the sensor for other applications, without requiring any substantial modification of the subject application.

For example, the sensor may be used to measure a pressure in a cylinder to optimize a timing of fuel injection from an injector for improving fuel efficiency and reducing exhaust gas (HC, NOx).

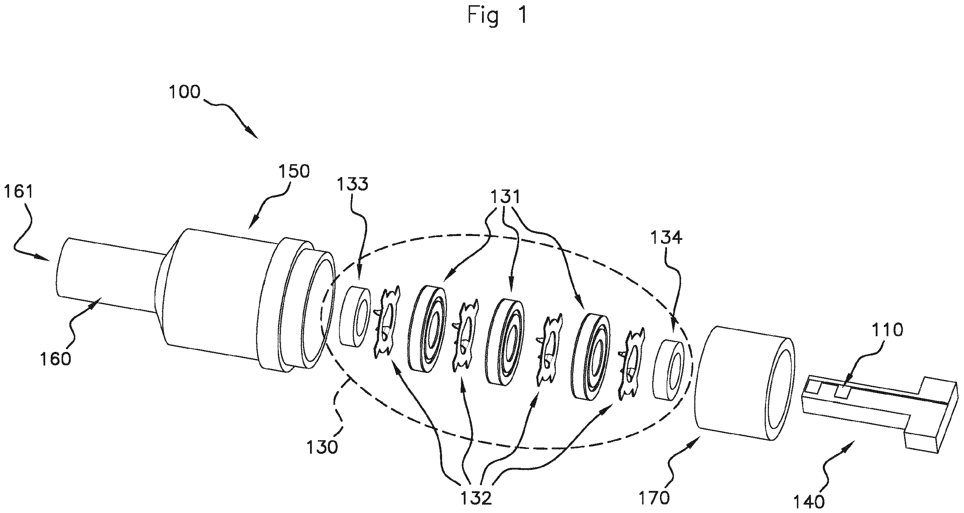

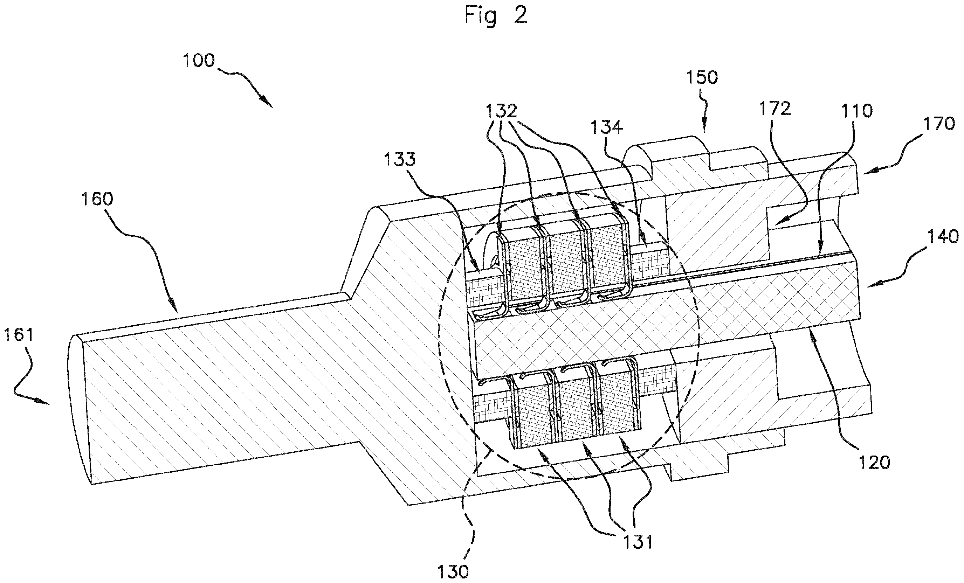

Referring to figures 1 and 2 illustrating a first embodiment of a sensor according to the invention, the sensor 100 comprises a positive electrode 110, a negative electrode 120 (not shown), a piezoelectric transducer assembly 130, a central pin 140 and a housing 150. The housing 150 accommodates the piezoelectric transducer assembly 130 and the central pin 140.

In an embodiment, the positive electrode 110 and the negative electrode 120 are connected in parallel with each other.

In an example, the positive electrode 110 and the negative electrode 120 are connected to input terminals of a processor (not shown) or a similar processing means configured to process the signals generated by the sensor 100 such that the processor can generate sensor output compensating temperature offset of the signal and sensitivity changes due to temperature.

The sensor 100, in general, comprises a body having a longitudinal axis extending between a front end and a rear end opposite to the front end.

In an embodiment, the cross-section of the sensor 100 is substantially circular. However, the cross-section of the sensor 100 may have other shapes, such as oval, elliptical, or polygonal (such as triangle, quadrangle, or hexagonal), without requiring any substantial modification of the subject application.

The piezoelectric transducer assembly 130, in general, comprises a body having a longitudinal axis that is substantially co-linear with the longitudinal axis of the body of the sensor 100.

The longitudinal axis of the body of the piezoelectric transducer assembly 130 extends between a front end and a rear end opposite to the front end. The front end and the rear end of the body of the piezoelectric transducer assembly 130 are respectively oriented toward the front end and the rear end of the body of the sensor 100.

In an embodiment, the cross-section of the piezoelectric transducer assembly 130 is substantially circular. However, the cross-section of the sensor 100 may have other shapes, such as oval, elliptical, or polygonal (such as triangle, quadrangle, or hexagonal), without requiring any substantial modification of the subject application.

The piezoelectric transducer assembly 130, in general, comprises a central opening 10 having a central axis substantially co-linear with the longitudinal axis of the body of the sensor 100.

In an embodiment, all elements of the piezoelectric transducer assembly 130 include a common central opening 10.

The central pin 140, in general, extends through the central opening 10 of the piezoelectric transducer assembly 130 in such manner to center and retain the piezoelectric transducer assembly 130 in place.

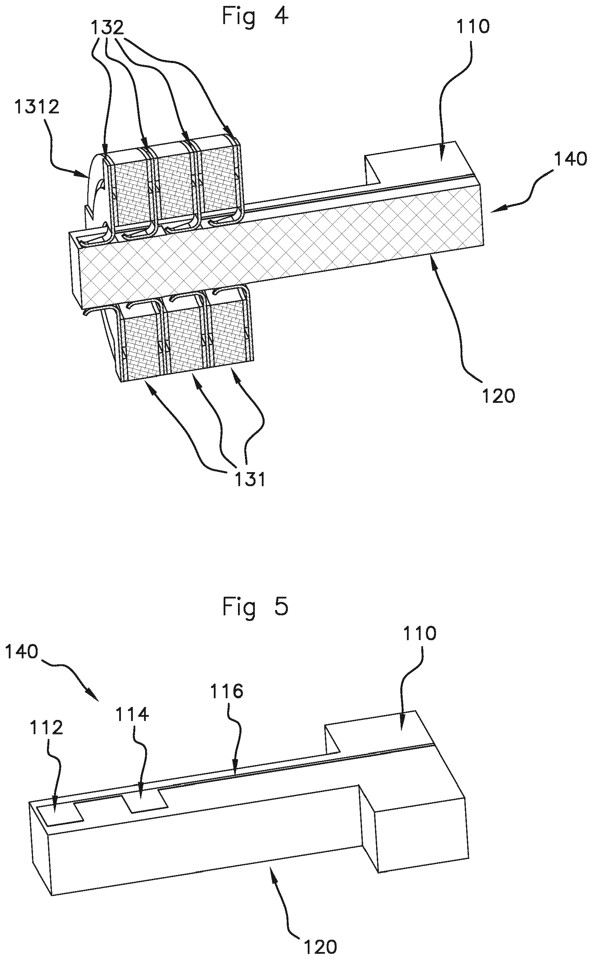

Furthermore, as illustrated in figure 5, the central pin 140 comprises a body having a longitudinal axis that is substantially co-linear with the longitudinal axis of the body of the sensor 100.

The longitudinal axis of the body of the central pin 140 extends between a front end and a rear end opposite to the front end. The front end and the rear end of the body of the central pin 140 are respectively oriented toward the front end and the rear end of the body of the sensor 100.

Furthermore, the body of the central pin 140 has a general T-shaped cross-section. In particular, the central pin 140 includes two arms of generally equal length forming the bar or top of the 'T' and a third longer arm forming the long member of the 'T' extending in the same direction than the longitudinal axis of the central pin 140. Further, the two arms forming the top of the T are disposed at the rear end of the body of the central pin 140 while the third longer arm starts at the front end of the body of the central pin 140.

Furthermore, the central pin 140 supports the positive electrode 110 and the negative electrode such that the positive electrode 110 is spaced apart from the negative electrode so that the positive electrode and the negative electrode are not in contact with each other.

In an example, the positive electrode 110 and the negative electrode are firmly fixed onto the central pin 140 by adhesive or heat attachment. In the illustrated embodiment of figures 1 and 2, the positive electrode 110 is fixed on a first main side of said central pin 140 and the negative electrode is fixed on a second main side 120 of said central pin, said second main side 120 being opposite and parallel to said first main side of the central pin 140.

In the illustrated embodiment of figure 5, the positive electrode 110 has a main wire form (or line form) 116 and two extended contact zones 112, 114 (having a rectangular form in this illustrated embodiment). Said extended contact zones ensure a more reliable electric contact.

In an embodiment, the central pin 140 may be coated with an insulating layer, such as silicon dioxide, or similar insulating coating.

In another embodiment, the central pin 140 may be made of an electrically insulating material such as ceramic, titanium, graphite composite or similar electrically insulating material.

The housing 150, in general, accommodates the piezoelectric transducer assembly 130 and the central pin 140.

Furthermore, the housing 150 comprises a body having a longitudinal axis that is substantially co-linear with the longitudinal axis of the body of the sensor 100.

The longitudinal axis of the body of the housing 150 extends between a front end and a rear end opposite to the front end. The front end and the rear end of the body of the central pin 140 are respectively oriented toward the front end and the rear end of the body of the sensor 100.

In said first embodiment, illustrated in Figures 1 and 2, the sensor 100 further comprises a pressure pin 160 comprising a body having a longitudinal axis. Said pressure pin 160 extends longitudinally from a front end of the housing 150. The front end and the rear end of the body of the pressure pin 160 are respectively oriented toward the front end and the rear end of the body of the sensor 100. In this embodiment, the pressure pin 160 extends from the front end of the housing 150 and is a part of it. In the illustrated first embodiment, the pressure pin 160 and the housing 150 are only one part.

Further, the pressure pin 160 connects to the housing 150 such that the rear end of the pressure pin 160 extends beyond a front end of the housing 150. With this configuration, the pressure pin 160 may transfer a force exerted on the pressure pin 160 to the housing 150.

Furthermore, the front end of the pressure pin 160 comprises a contact area 161.

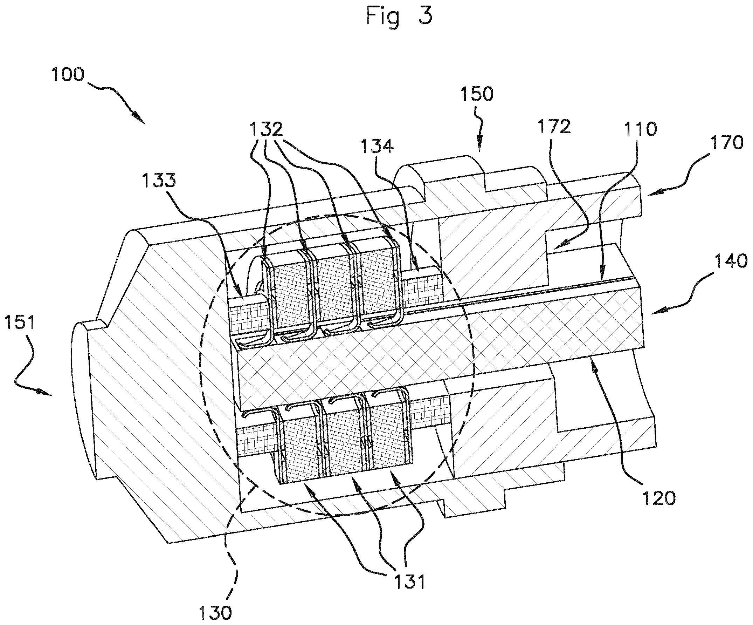

Figure 3 illustrates a second embodiment of a sensor according to the invention which does not comprise a pressure pin 160 but the front end of the housing 150 comprises a contact area 151.

Furthermore, as illustrated in Figures 2 and 3, the sensor 100 comprises a contact area 161, 151 that is able to be in contact with an environment or to come in contact with a part of a device from which said force and/or pressure is to be measured. The contact area 161, 151 may be of any shape allowing a contact with an environment or a part of a device from which said force and/or pressure is to be measured. In the illustrated first and second embodiments of figures 1 to 3, the contact area 161, 151 has a maximum cross-section that is smaller or equal as the minimum cross-section of the remaining part of the housing 150.

In an embodiment, the contact area 151, 161 of the housing 150 may comprise a planar face that is substantially parallel to a plane that is substantially perpendicular to the longitudinal axis of the sensor 100.

In an embodiment, the housing 150 is made of at least one material that is elastically deformable by an external force. This way, the piezoelectric transducer assembly 130 can sense the deformation of the housing 150 and allow force transfer from the contact area 151 to the piezoelectric transducer assembly 130. In an embodiment, the front part of the housing 150 is made of at least one material that is elastically deformable by an external force.

In an example, the external force is an axial force exerted on the contact area 151, 161 of the housing 150, in an axial direction of the sensor 100 (i.e., a force that pushes backwards).

In yet another embodiment, the housing 150 comprises an interior space having a closed front end and an opened rear end. Also, the sensor 100 further comprises a support element 170 coupled to the housing 150 in such manner to close the rear end of the interior space by applying a preload force, such that a front end of the piezoelectric transducer assembly 130 is maintained against the front end of the interior space.

In other words, it is a predetermined preload force that maintains the different part of the piezoelectric transducer assembly 130 together, which therefore do not need to be attached to each other.

In an example, the support element 170 is heat sealed, ultrasonically welded, glued, or otherwise permanently secured to the housing 150.

Furthermore, the support element 170 comprises a body having a longitudinal axis extending between a front end and a rear end opposite to the front end. The front end and the rear end of the body of the support element 170 are respectively oriented toward the front end and the rear end of the body of the sensor 100.

Further, the support element 170 comprises a longitudinal internal passage extending from the front end to the rear end. The rear end of the passage includes a shoulder 172 facing outwardly the rear end of the support element 170, such that said support element 170 has a front portion having an inner diameter smaller than an inner diameter of a rear portion, said shoulder 172 separating said front portion and said rear portion. When inserting the central pin 140 from the rear end of the support element 170 four longitudinal edges of said central pin 140 contacts the inner surface of said front portion of the support element 170. This helps maintaining radially said central pin 140. In the illustrated embodiments, the T-shape arms of the central pin 140 neither contact the shoulder 172 nor the inner surface of said rear portion of said support element 170. But in another embodiment, the T-shape arms of the central pin 140 may also contact the shoulder 172 and/or said inner surface of said rear portion of said support element 170. The central pin 140 is held in place axially with shoulder 172 and contact plates 132, and radially with the front portion of the support element.

In an embodiment, the housing 150 and/or the pressure pin 160 are made of at least one material that is elastically deformable by an external force. This way, the piezoelectric transducer assembly 130 can sense the deformation of the housing 150 and/or of the pressure pin 160 and allow force transfer from the contact area 161 to the piezoelectric transducer assembly 130. In an embodiment, the front part of the housing 150 is made of at least one material that is elastically deformable by an external force.

In more details, the piezoelectric transducer assembly 130 comprises a stack of at least one piezoelectric sensitive element 131 and at least two electrically conductive members 132.

According to the claimed invention, the piezoelectric transducer assembly 130 is so arranged that there is one more of electrically conductive members 132 than of piezoelectric sensitive elements 131 and such that two electrically conductive members 132 sandwich one piezoelectric sensitive element 131.

According to the first and second embodiments of a sensor as illustrated on Figures 1 to 5, the piezoelectric transducer assembly 130 comprises three piezoelectric sensitive elements 131 and four electrically conductive members 132.

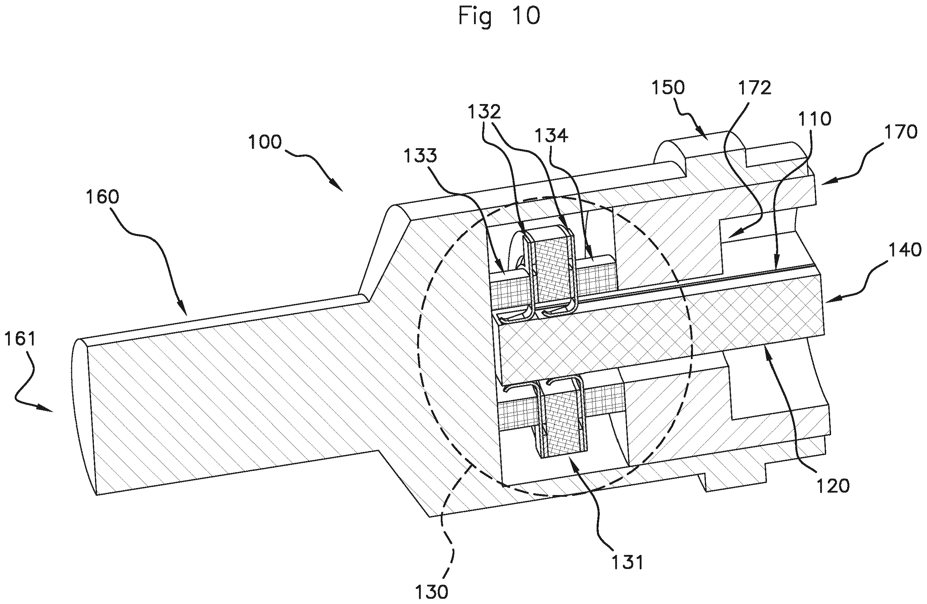

In a third embodiment of a sensor according to the invention, as illustrated on Figure 10, the piezoelectric transducer assembly 130 comprises one piezoelectric sensitive element 131 and two electrically conductive members 132.

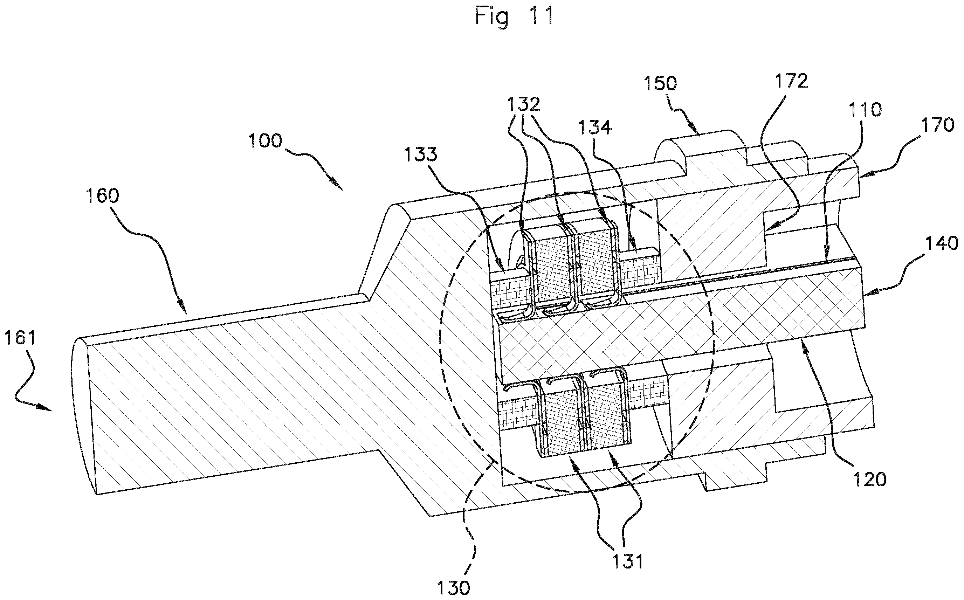

In a fourth embodiment of a sensor according to the invention, as illustrated on Figure 11, the piezoelectric transducer assembly 130 comprises two piezoelectric sensitive elements 131 and three electrically conductive members 132.

In another embodiment, the piezoelectric transducer assembly 130 further comprises a first electrically insulating member 133 disposed at the front end of the piezoelectric transducer assembly 130, in contact with an electrically conductive member 132. Said first electrically insulating member 133 also is in contact with an inner contact zone of the housing, allowing transmission of a force or a pressure to be measured from the contact area 161, 151 to the piezoelectric transducer assembly 130.

In yet another embodiment, compatible with the previous embodiment, the piezoelectric transducer assembly 130 further comprises a second electrically insulating member 134 disposed at a rear end of the piezoelectric transducer assembly 130, in contact with an electrically conductive member 132. Such arrangement has the effect of galvanically isolating the piezoelectric transducer assembly 130 from the housing 150.

Hence, in an example where the piezoelectric transducer assembly 130 comprises one piezoelectric sensitive element 131 and two electrically conductive members 132, the piezoelectric transducer assembly 130 may also comprise an electrically insulating member 133 disposed at its front end.

Hence, in an example where the piezoelectric transducer assembly 130 comprises one piezoelectric sensitive element 131 and two electrically conductive members 132, the piezoelectric transducer assembly 130 may also comprise a first electrically insulating member 133 disposed at its front end and a second electrically insulating member 134 disposed at its rear end.

In other words, the piezoelectric transducer assembly 130, whatever its internal configuration, may comprise zero, one or two electrically insulating members 133, 134 depending on the number and the polarization of the piezoelectric sensitive elements 131.

In an embodiment, the electrically insulating members 133, 134 may be made of an electrically insulating material such as ceramic, titanium, or similar electrically insulating material.

The piezoelectric sensitive element 131, in general, generates an electrical charge proportional to the pressure exerted upon the outer surface of the piezoelectric sensitive element 131.

Furthermore, the piezoelectric sensitive element 131 comprises a periphery having a substantially constant thickness.

In an example, the piezoelectric sensitive element 131 is made of a piezoelectric material, such as quartz (SiO₂), barium titanate (BaTiO3), lead titanate (PbTiO₃), lead zirconate titanate (Pb(Zr,Ti)O₃), lead lanthanum zirconate titanate ((Pb,La)(Zr,Ti)O₃), lithium niobate (LiNbO₃), lead metaniobate (PbNb₂O₆), polyvinylidene fluoride (PVDF), zinc oxide (ZnO), aluminum nitride (AIN), or tantalum oxide (TazOs) or similar piezoelectric materials.

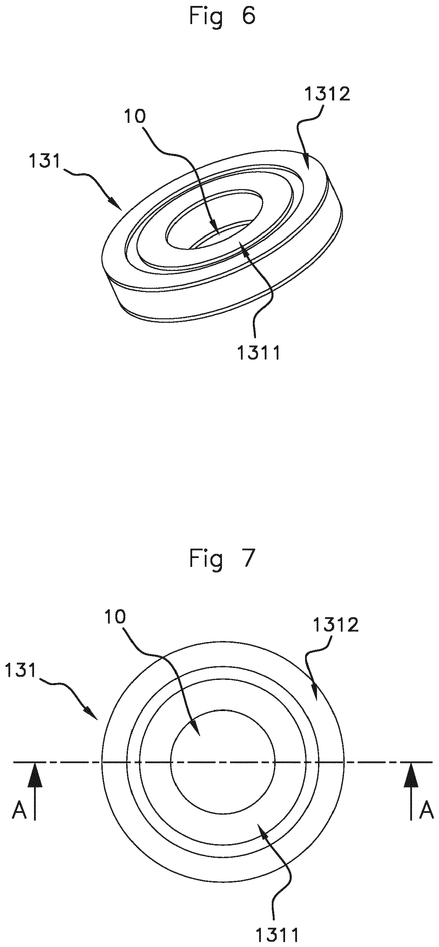

Furthermore, as illustrated in figures 6, 7 and 8, the piezoelectric sensitive element 131 has opposed faces, each comprising at least one inner electrode 1311 and an outer electrode 1312, surrounding the inner electrode 1311.

According to the claimed invention, the opposed faces of the piezoelectric sensitive element 131 may be substantially parallel to a plane that is substantially perpendicular to the longitudinal axis of the sensor 100.

In another embodiment, the inner electrode 1311 is delimited by the central opening 10.

In yet another embodiment, compatible with the previous embodiment, the outer electrode 1312 is delimited by the piezoelectric sensitive element 131.

In still yet another embodiment, the inner electrode 1311 and the outer electrode 1312 may occupy substantially the same area on each face of the piezoelectric sensitive element 131. This has the effect to facilitate compensation of pyroelectric effect.

Furthermore, the inner electrode 1311 and the outer electrode 1312 are mutually separated, that is to say that said inner electrode 1311 and said outer electrode 1312 do not contact each other, and are mutually polarized along opposite directions of the thickness of the piezoelectric sensitive element 131.

In an example, the polarization of the piezoelectric sensitive element 131 is performed by applying a D.C. voltage in opposite directions across respective regions of the piezoelectric sensitive element 131 which are associated to the inner electrode 1311 and the outer electrode 1312. This may easily be accomplished, since the direction of polarization depends on the polarity of the applied voltage. Such exposure of the piezoelectric sensitive element 131 has the effect that oppositely polarized charges are created on the opposite electrodes when the piezoelectric sensitive element 131 is subjected to pressure and/or force (i.e., piezoelectricity effect) and/or subjected to change of temperature (i.e., pyroelectricity effect). The polarization is performed during production of the piezoelectric sensitive element 131, before stacking of element 131 into the piezoelectric transducer assembly 130.

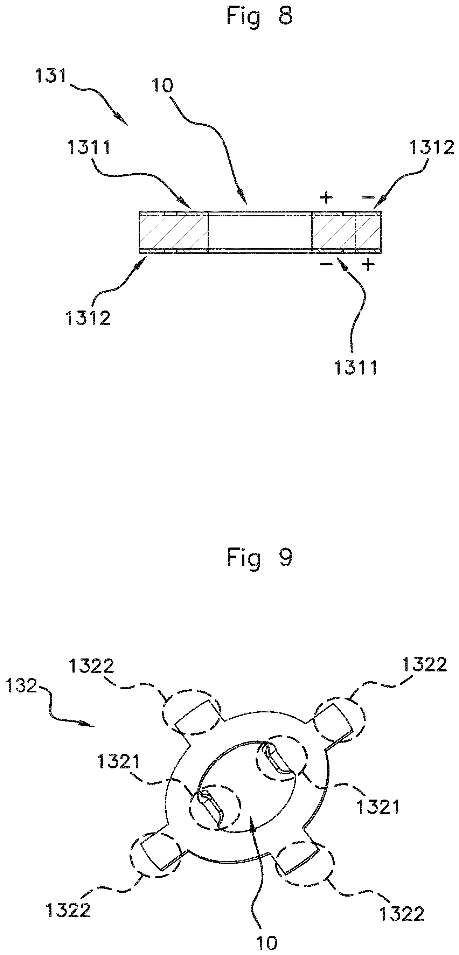

As illustrated in Figure 9, each electrically conductive member 132, in general, comprises a plurality of outward arms 1322 extending outwardly from the central opening 10 of the electrically conductive member 132, such that the cross-section of each electrically conductive member 132 is substantially "star-shaped".

Further, each outward arm 1322 comprises a first region and second region, where the second region is more flexible than the first region such that minimum force transfer can occur from the first region to the second region.

In an embodiment, the first region is delimited by the central opening 10 while the second region is delimited by the tip of the outward arm 1322.

Furthermore, each electrically conductive member 132 further comprises at least one inward arm 1321 extending inwardly from an outward arm 1322 toward the center of the central opening 10.

In an embodiment, each electrically conductive member 132 comprises two inward arms 1321. Said inward arms 1321 contact the positive electrode or the negative electrode. More particularly, said inward arms 1321 contact the extended contact zones 112, 114 of said positive electrode and said negative electrode.

In another embodiment, each electrically conductive member 132 comprises four inward arms 1321.

In an example, the cross-section of the tip of at least one inward arm 1321 is curved. However, the cross-section of the tip of each inward arm 1321 may have other shapes, such as "L-shape" or "S-shape", without requiring any substantial modification of the subject application.

Furthermore, each electrically conductive member 132 is so arranged that the outward arms 1322 contact the inner electrode 1311 and the outer electrode 1312.

In particular, the first regions of the outward arms 1322 contact the inner electrode 1311 while the second region of the outward arms 1322 contact the outer electrode 1312. This way, charges created from the inner electrode 1311 and the outer electrode 1312 can be transferred to the electrically conductive member 132.

Furthermore, the electrically conductive members 132 have opposed faces.

Further, each electrically conductive member 132 is so also arranged that only one tip of an inward arm 1321 contacts either the positive electrode 110 or the negative electrode 120.

In an embodiment, the inward arm 1321 contacting either the positive electrode 110 or the negative electrode 120, is so designed to prevent the transfer of axial forces between the central pin 140 and the piezoelectric transducer assembly 130.

Hence, where each electrically conductive member 132 comprises two inward arms 1321, the tip of a first inward arm 1321 contacts either the positive electrode 110 or the negative electrode 120, while the tip of a second inward arm 1321 does not contact the positive electrode 110 or the negative electrode 120. For example, the tip of the second inward may contact the body of the central tip.

Also, where each electrically conductive member 132 comprises four inward arms 1321, the tip of a first inward arm 1321 contacts either the positive electrode 110 or the negative electrode 120, while the tip of a second inward arm 1321, a third inward arm 1321 and a fourth inward arm 1321 do not contact the positive electrode 110 or the negative electrode 120. For example, the tip of the second inward arm 1321, the third inward arm 1321 and the fourth inward arm 1321 may contact the body of the central tip.

Finally, where two electrically conductive members 132 are sandwiching a piezoelectric sensitive element 131, one electrically conductive member 132 is connected to the positive electrode 110, while the other one is connected to the negative electrode 120.

Furthermore, in another embodiment, the electrically conductive members 132 connected to the positive electrode 110 are connected in series, while the electrically conductive members 132 connected to the negative electrode 120 are connected in series.

In an embodiment, the electrically conductive members 132 may be made of an electrically conductive material such as metal, conductive composite, or similar electrically conductive material.

The sensor 100 of the subject application can effectively cancel any disturbances caused by temperature variations thanks to the combination of the parallel interconnection of the negative and positive electrodes 110 and the opposite polarization of the inner and outer electrodes 1311, 1312 of the piezoelectric sensitive element 131.

Indeed, in operation, when a compressive stress is applied to the inner electrodes 1311 of the piezoelectric sensitive elements 131 through the contact area 151 of the housing 150 or the contact area 161 of the pressure pin 160, electric charges proportional to the compressive stress are generated in the inner electrodes 1311 of the piezoelectric sensitive element 131. However, since the stress is not transmitted to the outer electrodes 1312, the generated electric charge is very small but can be detected. Furthermore, when a temperature change occurs in the piezoelectric sensitive element 131, charges of opposite polarity due to the pyroelectric effect are generated in the inner electrodes 1311 and the outer electrodes 1312 in proportion to the polarized area. That is, since the inner electrode 1311 and the outer electrode 1312 are electrically conducted by the electrically conductive members 132, the charge due to the pyroelectric effect can be canceled by subtracting the charges generated in the outer electrodes 1312 from the charges generated in the inner electrodes 1311 of the piezoelectric elements. This way, the pyroelectric effect is canceled, and the charge generated by the compression is accurate and can be sent to a processor for further processing.

In other words, in the subject application, pressure is only applied to inner electrodes 1311. Furthermore, the inner and outer electrodes 1311, 1312 are in electric contact such that the effects of temperature change subtract themselves in such a manner to compensate for the pyroelectric charge. Therefore, the total charge output by the sensor 100 of the subject application is caused only by the pressure/force load and not by the temperature change.

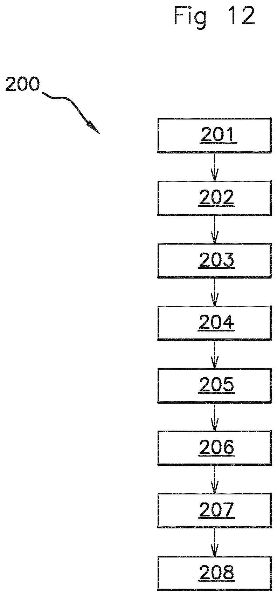

Figure 12 illustrates a method 200 of manufacturing the sensor 100.

In step 201, at least one piezoelectric sensitive element 131 having, on each face of the piezoelectric sensitive element 131, at least one inner electrode 1311 and at least one outer electrode 1312 surrounding the inner electrode 1311 is provided, said inner electrode 1311 and said outer electrode 1312 being mutually separated

In step 202, there is performed on each opposed face of the piezoelectric sensitive element 131, a polarization operation such that the outer electrode 1312 and the inner electrode 1311 are mutually polarized along opposite directions of the thickness of the piezoelectric sensitive element 131.

In step 203, a positive electrode 110 and a negative electrode are fixed on a central pin 140 made of an electrically insulating material.

More particularly, there is provided a central pin 140 supporting the positive electrode 110 and the negative electrode such that the positive electrode 110 is not in contact with the negative electrode.

More particularly, in an embodiment, there is arranged the positive electrode 110 and the negative electrode such that they are connected in parallel.

In step 204, said central pin 140 is inserted through a support element 170, said support element 170 having a longitudinal internal passage extending from the front end to the rear end of the support element 170.

Further, there is provided rear end of the internal passage with a shoulder facing outwardly the rear end of the support element 170, such that when inserting the central pin 140 from the rear end of the support element 170, the two arms of the T-shape of the central pin 140 abut against the shoulder to securely retain the central pin 140 in place.

In step 205, there is provided a piezoelectric transducer assembly 130 comprising a central opening 10.

In an embodiment, there is provided the piezoelectric transducer assembly 130 with a substantially circular cross-section.

In step 205, there is more particularly provided the piezoelectric transducer assembly 130 with a stack of at least one piezoelectric sensitive element 131 and at least two electrically conductive members 132, the piezoelectric sensitive element 131 having opposed faces.

In an embodiment, there is arranged the piezoelectric transducer assembly 130 such that there is one more of electrically conductive members 132 than of piezoelectric sensitive elements 131 and such that two electrically conductive members 132 sandwich one piezoelectric sensitive element 131.

In another embodiment, there is provided a first electrically insulating member 133 disposed in front of the piezoelectric transducer assembly 130, in contact with an electrically conductive member 132.

In yet another embodiment, compatible with the previous embodiment, there is provided a second electrically insulating member 134 disposed at a rear of the piezoelectric transducer assembly 130, in contact an electrically conductive member 132. Such arrangement has the effect of galvanically isolating the piezoelectric transducer assembly 130 from the housing 150.

In step 205, there is provided on each face of the piezoelectric sensitive element 131 with at least one inner electrode 1311 and an outer electrode 1312 surrounding the inner electrode 1311, the inner electrode 1311 and the outer electrode 1312 being mutually separated.

In an embodiment, there is arranged the piezoelectric sensitive element 131 such that the inner electrode 1311 is delimited by the central opening 10.

In another embodiment, there is arranged the piezoelectric sensitive element 131 such that the outer electrode 1312 is delimited by the piezoelectric sensitive element 131.

In still yet another embodiment, there is arranged the piezoelectric sensitive element 131 such that the inner electrode 1311 and the outer electrode 1312 may occupy substantially the same area on each face of the piezoelectric sensitive element 131.

In an embodiment, there is arranged the piezoelectric transducer assembly 130 such that one of the two electrically conductive members 132 sandwiching the piezoelectric sensitive element 131 is connected to the positive electrode 110, while the other one is connected to the negative electrode 120.

In another embodiment, there is arranged the electrically conductive members 132 such that the electrically conductive members 132 connected to the positive electrode 110 are connected in series, while the electrically conductive members 132 connected to the negative electrode 120 are connected in series.

In step 206, said piezoelectric transducer assembly 130 is arranged around said central pin 140.

In step 207, a housing 150 is positioned around the piezo assembly 130 and the pressure pin 140, i.e. said piezoelectric transducer assembly 130 and said pressure pin 140 are positionned inside said housing 150. The housing 150 is positionned so that it is in axial contact with first electrically insulating member 133 and radial contact with support element 170.

In step 208, a preload is applied to said housing 150 and said housing 150 is fastened (for example welded) to said support element 170.

In step 208, there is applied a preload force on the piezoelectric transducer assembly 130 in such manner to be maintained in the housing 150 such that two electrically conductive members 132 sandwich the piezoelectric sensitive element 131 and such that the outer electrode 1312 and the inner electrode 1311 are connected with the positive electrode 110 and the negative electrode 120.

In other words, it is a predetermined preload force that maintains the different part of the piezoelectric transducer assembly 130 together, which therefore do not need to be attached to each other.

Furthermore, there is provided the housing 150 with a material that is elastically deformable by an external force.

In an example, the external force is an axial force exerted on the contact area 151 of the housing 150, in the axial direction of the sensor 100 (i.e., a force that pushes backwards).

In another embodiment, there is provided the housing 150 with an interior space having a closed front end and an opened rear end.

Therefore, a sensor 100 according to the subject application is reliable and easy to manufacture.

## Claims

1. A sensor (100) for force and/or pressure measurement, the sensor (100) comprising:
- a body having a longitudinal axis,
- a piezoelectric transducer assembly (130) comprising a central opening (10), said piezoelectric transducer assembly (130) having a longitudinal axis colinear with the longitudinal axis of said body,
- a central pin (140) extending through the central opening (10) and supporting a positive electrode (110) and a negative electrode (120) such that the positive electrode (110) is spaced apart from the negative electrode (120), and
- a housing (150) for accommodating the piezoelectric transducer assembly and the central pin (140),
wherein,
- the piezoelectric transducer assembly (130) comprises a longitudinal stack of at least one piezoelectric sensitive element (131) and at least two electrically conductive members (132),
- the piezoelectric sensitive element (131) having opposed faces, each face being perpendicular to said longitudinal axis and comprising at least one inner electrode (1311) and at least one outer electrode (1312) surrounding radially the inner electrode (1311), the inner electrode (1311) and the outer electrode (1312) being mutually separated,
and wherein,
- the outer electrode (1312) and the inner electrode (1311), on each opposed face of the piezoelectric sensitive element (131), are mutually polarized along opposite directions of the thickness of the piezoelectric sensitive element (131), and
- two electrically conductive members (132) sandwich said at least one piezoelectric sensitive element (131) such that each outer electrode (1312) and each inner electrode (1311) are connected with the positive electrode (110) and the negative electrode (120), and the piezoelectric transducer assembly (130) is so arranged that one of said two electrically conductive members (132) sandwiching said at least one piezoelectric sensitive element (131) is connected to the positive electrode (110), while the other one is connected to the negative electrode.

2. Sensor (100) of claim 1 wherein said positive electrode (110) and said negative electrode (120) are connected in parallel with each other.

3. Sensor (100) of claims 1 or 2, wherein the piezoelectric transducer assembly (130) is so arranged that there is one more of electrically conductive members (132) than of piezoelectric sensitive elements (131) and such that two electrically conductive members (132) sandwich one piezoelectric sensitive element (131).

4. Sensor (100) of claim 1, 2 or 3, wherein the electrically conductive members (132) connected to the positive electrode (110) are connected in series, and the electrically conductive members (132) connected to the negative electrode (120) are connected in series.

5. Sensor (100) of claim 1, 2, 3 or 4, wherein the piezoelectric transducer assembly (130) further comprises a first electrically insulating member (133) disposed in front of the piezoelectric transducer assembly (130), said first electrically insulating member (133) being in contact with an electrically conductive member (132).

6. Sensor (100) of claim 1, 2, 3, 4 or 5, wherein the piezoelectric transducer assembly (130) further comprises a second electrically insulating member (134) disposed at the rear of the piezoelectric transducer assembly (130), in contact an electrically conductive member (132).

7. Sensor (100) of claim 1, 2, 3, 4, 5 or 6, wherein the inner electrode (1311) is delimited by the central opening (10).

8. Sensor (100) of claim 1, 2, 3, 4, 5, 6 or 7, wherein the outer electrode (1312) is delimited by the piezoelectric sensitive element (131).

9. Sensor (100) of claim 1, 2, 3, 4, 5, 6, 7 or 8 wherein the cross-section of the piezoelectric transducer assembly (130) is substantially circular.

10. Sensor (100) of claim 1, 2, 3, 4, 5, 6, 7, 8or 9, wherein the housing (150) comprising an interior space having a closed front end and an opened rear end, the sensor (100) further comprising a support element (170) coupled to the housing (150) in such manner to close the rear end of the interior space by applying a preload force, such that a front end of the piezoelectric transducer assembly (130) is maintained against the front end of the interior space.

11. Sensor (100) of claim 10, wherein the support element (170) comprises a longitudinal internal passage extending from the front end to the rear end of the support element (170), the rear end of the internal passage including a shoulder 172 facing outwardly the rear end of the support element (170).

12. Sensor (100) of claim 1, 2, 3, 4, 5, 6, 7, 8, 9, 10or 11 wherein the housing (150) is made of a material that is elastically deformable by an external force.

13. Sensor (100) of claim 12 further comprising a pressure pin (160) extending longitudinally from a front end of the housing (150).

## Patentansprüche

1. Sensor (100) zur Kraft- und/oder Druckmessung, wobei der Sensor (100) umfasst:
- einen Körper mit einer Längsachse,
- eine piezoelektrische Wandleranordnung (130), die eine zentrale Öffnung (10) umfasst, wobei die piezoelektrische Wandleranordnung (130) eine Längsachse kollinear mit der Längsachse des Körpers aufweist,
- einen zentralen Stift (140), der sich durch die zentrale Öffnung (10) erstreckt und eine positive Elektrode (110) und eine negative Elektrode (120) trägt, sodass die positive Elektrode (110) von der negativen Elektrode (120) beabstandet ist, und
- ein Gehäuse (150) zum Aufnehmen der piezoelektrischen Wandleranordnung und des zentralen Stifts (140),
wobei
- die piezoelektrische Wandleranordnung (130) einen Längsstapel mindestens eines piezoelektrischen empfindlichen Elements (131) und mindestens zweier elektrisch leitender Elemente (132) umfasst,
- das piezoelektrische empfindliche Element (131) zwei gegenüberliegende Seiten aufweist, wobei jede Seite senkrecht zur Längsachse ist und mindestens eine innere Elektrode (1311) und mindestens eine äußere Elektrode (1312) umfasst, die die innere Elektrode (1311) radial umgibt, wobei die innere Elektrode (1311) und die äußere Elektrode (1312) voneinander getrennt sind,
und wobei
- die äußere Elektrode (1312) und die innere Elektrode (1311) auf jeder gegenüberliegenden Seite des piezoelektrischen empfindlichen Elements (131) zueinander entlang entgegengesetzter Richtungen der Dicke des piezoelektrischen empfindlichen Elements (131) polarisiert sind, und
- zwei elektrisch leitende Elemente (132) das mindestens eine piezoelektrische empfindliche Element (131) sandwichartig einschließen, sodass jede äußere Elektrode (1312) und jede innere Elektrode (1311) mit der positiven Elektrode (110) und der negativen Elektrode (120) verbunden sind, und die piezoelektrische Wandleranordnung (130) so angeordnet ist, dass eines der zwei elektrisch leitenden Elemente (132), die das mindestens eine piezoelektrische empfindliche Element (131) sandwichartig einschließen, mit der positiven Elektrode (110) verbunden ist, während das andere mit der negativen Elektrode verbunden ist.

2. Sensor (100) nach Anspruch 1, wobei die positive Elektrode (110) und die negative Elektrode (120) parallel zueinander geschaltet sind.

3. Sensor (100) nach Anspruch 1 oder 2, wobei die piezoelektrische Wandleranordnung (130) so angeordnet ist, dass es ein elektrisch leitendes Element (132) mehr als piezoelektrische empfindliche Elemente (131) gibt und so, dass zwei elektrisch leitende Elemente (132) ein piezoelektrisches empfindliches Element (131) sandwichartig einschließen.

4. Sensor (100) nach Anspruch 1, 2 oder 3, wobei die elektrisch leitenden Elemente (132), die mit der positiven Elektrode (110) verbunden sind, in Reihe geschaltet sind, und die elektrisch leitenden Elemente (132), die mit der negativen Elektrode (120) verbunden sind, in Reihe geschaltet sind.

5. Sensor (100) nach Anspruch 1, 2, 3 oder 4, wobei die piezoelektrische Wandleranordnung (130) ferner ein erstes elektrisch isolierendes Element (133) umfasst, das vor der piezoelektrischen Wandleranordnung (130) angeordnet ist, wobei das erste elektrisch isolierende Element (133) mit einem elektrisch leitenden Element (132) in Kontakt ist.

6. Sensor (100) nach Anspruch 1, 2, 3, 4 oder 5, wobei die piezoelektrische Wandleranordnung (130) ferner ein zweites elektrisch isolierendes Element (134) umfasst, das auf der Rückseite der piezoelektrischen Wandleranordnung (130) in Kontakt mit einem elektrisch leitenden Element (132) angeordnet ist.

7. Sensor (100) nach Anspruch 1, 2, 3, 4, 5 oder 6, wobei die innere Elektrode (1311) durch die zentrale Öffnung (10) begrenzt wird.

8. Sensor (100) nach Anspruch 1, 2, 3, 4, 5, 6 oder 7, wobei die äußere Elektrode (1312) durch das piezoelektrische empfindliche Element (131) begrenzt wird.

9. Sensor (100) nach Anspruch 1, 2, 3, 4, 5, 6, 7 oder 8, wobei der Querschnitt der piezoelektrischen Wandleranordnung (130) im Wesentlichen kreisförmig ist.

10. Sensor (100) nach Anspruch 1, 2, 3, 4, 5, 6, 7, 8 oder 9, wobei das Gehäuse (150) einen Innenraum mit einem geschlossenen vorderen Ende und einem geöffneten hinteren Ende umfasst, wobei der Sensor (100) ferner ein Trägerelement (170) umfasst, das so mit dem Gehäuse (150) gekoppelt ist, dass es das hintere Ende des Innenraums durch Anwenden einer Vorspannkraft schließt, sodass ein vorderes Ende der piezoelektrischen Wandleranordnung (130) gegen das vordere Ende des Innenraums gehalten wird.

11. Sensor (100) nach Anspruch 10, wobei das Trägerelement (170) einen längslaufenden inneren Durchgang umfasst, der sich vom vorderen Ende zum hinteren Ende des Trägerelements (170) erstreckt, wobei das hintere Ende des inneren Durchgangs eine Schulter (172) umfasst, die nach außen zum hinteren Ende des Trägerelements (170) weist.

12. Sensor (100) nach Anspruch 1, 2, 3, 4, 5, 6, 7, 8, 9, 10 oder 11, wobei das Gehäuse (150) aus einem Material hergestellt ist, das durch eine externe Kraft elastisch verformbar ist.

13. Sensor (100) nach Anspruch 12, ferner umfassend einen Druckstift (160), der sich in Längsrichtung von einem hinteren Ende des Gehäuses (150) erstreckt.

## Revendications

1. Capteur (100) destiné à mesurer une forme et/ou une pression, le capteur (100) comprenant :
- un corps ayant un axe longitudinal,
- un transducteur piézoélectrique (130) comprenant une ouverture centrale (10), ledit transducteur piézoélectrique (130) ayant un axe longitudinal colinéaire avec l'axe longitudinal dudit corps,
- une tige centrale (140) qui s'étend à travers l'ouverture centrale (10) et qui supporte une électrode positive (110) et une électrode négative (120) de sorte que l'électrode positive (110) soit espacée de l'électrode négative (120), et
- un logement (150) destiné à contenir le transducteur piézoélectrique et la tige centrale (140),
dans lequel
- le transducteur piézoélectrique (130) comprend une pile longitudinale d'au moins un élément sensible piézoélectrique (131) et d'au moins deux éléments électriquement conducteurs (132),
- l'élément sensible piézoélectrique (131) ayant des faces opposées, chaque face étant perpendiculaire audit axe longitudinal et comprenant au moins une électrode interne (1311) et au moins une électrode externe (1312) qui entoure radialement l'électrode interne (1311), l'électrode interne (1311) et l'électrode externe (1312) étant mutuellement séparées,
et dans lequel
- l'électrode externe (1312) et l'électrode interne (1311), sur chaque face opposée de l'élément sensible piézoélectrique (131), sont mutuellement polarisées le long de directions opposées de l'épaisseur de l'élément sensible piézoélectrique (131), et
- deux éléments électriquement conducteurs (132) prennent en sandwich ledit au moins un élément sensible piézoélectrique (131) de sorte que chaque électrode externe (1312) et chaque électrode interne (1311) soient reliées à l'électrode positive (110) et à l'électrode négative (120), et le transducteur piézoélectrique (130) est prévu de sorte que l'un desdits deux éléments électriquement conducteurs (132) qui prennent en sandwich ledit au moins un élément sensible piézoélectrique (131) soit relié à l'électrode positive (110), tandis que l'autre est relié à l'électrode négative.

2. Capteur (100) selon la revendication 1, dans lequel ladite électrode positive (110) et ladite électrode négative (120) sont reliées en parallèle l'une à l'autre.

3. Capteur (100) selon la revendication 1 ou 2, dans lequel le transducteur piézoélectrique (130) est prévu de sorte qu'il y ait un élément électriquement conducteur (132) de plus que les éléments sensibles piézoélectriques (131) et de sorte que deux éléments électriquement conducteurs (132) prennent en sandwich un élément sensible piézoélectrique (131).

4. Capteur (100) selon la revendication 1, 2 ou 3, dans lequel les éléments électriquement conducteurs (132) reliés à l'électrode positive (110) sont reliés en série, et les éléments électriquement conducteurs (132) reliés à l'électrode négative (120) sont reliés en série.

5. Capteur (100) selon la revendication 1, 2, 3 ou 4, dans lequel le transducteur piézoélectrique (130) comprend en outre un premier élément électriquement isolant (133) disposé en face du transducteur piézoélectrique (130), ledit premier élément électriquement isolant (133) étant en contact avec un élément électriquement conducteur (132).

6. Capteur (100) selon la revendication 1, 2, 3, 4 ou 5, dans lequel le transducteur piézoélectrique (130) comprend en outre un deuxième élément électriquement isolant (134) disposé à l'arrière du transducteur piézoélectrique (130), en contact avec un élément électriquement conducteur (132).

7. Capteur (100) selon la revendication 1, 2, 3, 4, 5 ou 6, dans lequel l'électrode interne (1311) est délimitée par l'ouverture centrale (10).

8. Capteur (100) selon la revendication 1, 2, 3, 4, 5, 6 ou 7, dans lequel l'électrode externe (1312) est délimitée par l'élément sensible piézoélectrique (131).

9. Capteur (100) selon la revendication 1, 2, 3, 4, 5, 6, 7 ou 8, dans lequel la section transversale du transducteur piézoélectrique (130) est sensiblement circulaire.

10. Capteur (100) selon la revendication 1, 2, 3, 4, 5, 6, 7, 8 ou 9, dans lequel le logement (150) comprend un espace intérieur ayant une extrémité avant fermée et une extrémité arrière ouverte, le capteur (100) comprenant en outre un élément de support (170) couplé au logement (150) de façon à fermer l'extrémité arrière de l'espace intérieur en appliquant une force de précharge, de sorte qu'une extrémité avant du transducteur piézoélectrique (130) soit maintenue contre l'extrémité avant de l'espace intérieur.

11. Capteur (100) selon la revendication 10, dans lequel l'élément de support (170) comprend un passage interne longitudinal qui s'étend de l'extrémité avant jusqu'à l'extrémité arrière de l'élément de support (170), l'extrémité arrière du passage interne comprenant un épaulement (172) tourné, vers l'extérieur, vers l'extrémité arrière de l'élément de support (170).

12. Capteur (100) selon la revendication 1, 2, 3, 4, 5, 6, 7, 8, 9, 10 ou 11, dans lequel le logement (150) est composé d'un matériau qui est élastiquement déformable par une force externe.

13. Capteur (100) selon la revendication 12, comprenant en outre une goupille de pression (160) qui s'étend longitudinalement depuis une extrémité avant du logement (150).
